# EUROPÄISCHE PATENTSCHRIFT

(11) **EP 1 295 754 B1**
(45) Veröffentlichungstag und Bekanntmachung des Hinweises auf die Patenterteilung: **27.02.2008**
(21) Anmeldenummer: 02017881.0
(22) Anmeldetag: 09.08.2002
(51) Int. Cl.: B60Q 1/48, G01S 13/93

(54) **Verfahren zur Steuerung eines Nahbereichserkennungssystems für Fahrzeuge sowie Nahbereichserkennungssystem**
Method for controlling a close-range recognition system for vehicle and close-range recognition system
Procédé pour le contrôle d'un sytème de reconnaissance à courte portée pour un véhicule ainsi que le sytème de reconnaissance à courte portée

(30) Priorität: 20.09.2001 DE 10146249
(43) Veröffentlichungstag der Anmeldung: 26.03.2003
(73) Patentinhaber: Valeo Schalter und Sensoren GmbH, 74321 Bietigheim-Bissingen (DE)
(72) Erfinder: Jecker, Nicolas, 73728 Esslingen (DE); Hoffsommer, Klaus, 74321 Bietigheim-Bissingen (DE); Lill, Anton, 74348 Lauffen (DE); Gotzig, Heinrich, Dr., 74081 Heilbronn (DE)
(74) Vertreter: Steimle, Josef

(56) Entgegenhaltungen:
- EP-A- 1 058 126

## Beschreibung

Die Erfindung betrifft ein Verfahren zur Steuerung eines Nahbereichserkennungssystems sowie ein Nahbereichserkennungssystem für Fahrzeuge, mit einem zentralen Steuergerät, das mehrere Abstandsmesssensoren ansteuert und aktiviert.

Derartige Verfahren und Systeme sind in vielfältiger Art und Weise bekannt. Nachteil der bekannten Verfahren und Systeme ist, dass sie bei Vorhandensein von Medien, wie beispielsweise Schnee, Eis, Wasser oder Verschmutzungen auf den Abstandssensoren die Abstandsmessungen nachteilig beeinflusst und das System gestört wird. Eine aus der Abdeckung resultierende Blindphase der Sensoren hängt von der Art und dem Zustand des auf dem jeweiligen Abstandmesssensor wirkenden Mediums ab. So ändert sich beispielsweise die Blindphase eines Abstandsmesssensors der von schmelzendem Eis abgedeckt wird über die Zeit.

Aus der EP 0 1058 126 A2 ist eine Abstandsmessvorrichtung bekannt geworden, bei sich entlang des Stoßfängers ausbreitende Übersprechsignale zur Beurteilung der Funktionstüchtigkeit der Vorrichtung herangezogen werden.

Der vorliegenden Erfindung liegt deshalb die Aufgabe zugrunde, ein Verfahren zur Steuerung eines Nahbereichserkennungssystems für Fahrzeuge als auch ein Nahbereichserkennungssystem vorzuschlagen, welches den genannten Nachteilen des Standes der Technik abhilft. Insbesondere soll die Blindphase einzelner Abstandsmesssensoren besser erkannt werden.

Diese Aufgabe wird durch ein Verfahren zur Steuerung eines Eingangs beschriebenen Nahbereichserkennungssystems für Fahrzeuge gelöst, dass sich durch folgende Verfahrensschritte auszeichnet.
a) Stellen der Abstandsmesssensoren auf eine Empfindlichkeit, die höher der normalen Empfindlichkeit ist,
b) Aktivieren der Abstandsmesssensoren,
c) Freigeben und auf normale Empfindlichkeit Stellen derjenigen Abstandsmesssensoren, die ein reflektiertes Signal empfangen,
d) Verwerfen des in Schritt c) empfangenen Signals oder nur dann ausfiltern des in Schritt c) empfangenen Signals, wenn es sich bei dem Signal um ein Störsignal handelt,
e) Nichtfreigeben derjenigen Abstandsmesssensoren, die kein reflektiertes Signal empfangen, und
f) erneutes Aktivieren der gemäß Schritt c) freigegebenen Abstandsmesssensoren und Auswerten der empfangenen Signale.

Dadurch, dass die Abstandsmesssensoren in Schritt a) auf vorzugsweise eine höhere Empfindlichkeit als die im Betrieb vorgesehene normale Empfindlichkeit gestellt werden und gemäß Schritt b) aktiviert werden, empfangen die Abstandsmesssensoren dann ein reflektiertes Signal, wenn sie nicht von unerwünschten Medien abgedeckt sind. Aufgrund der hohen Empfindlichkeit der Abstandsmesssensoren werden auch Störsignale empfangen, die Normalerweise nicht empfangen werden, wenn die Abstandsmesssensoren auf normale Empfindlichkeit eingestellt sind. Die Reihenfolge der Verfahrensschritte a) und b) ist nicht wesentlich.

Sobald also ein Sensor das erste Signal empfängt, wird er gemäß Schritt c) von dem Steuergerät freigegeben und auf normale Empfindlichkeit programmiert, falls Schritt b) mit einer höheren als der normalen Empfindlichkeit erfolgt. Für diesen Sensor wird dann im weiteren die normale Empfindlichkeit, d.h. die normale Filterfunktion für unerwünschte Störsignale, verwendet. Wenn das erste empfangene Signal mit einem Abstandsmesssensor mit hoher Empfindlichkeit empfangen wurde, kann nicht ausgeschlossen werden, dass es sich bei diesem Signal um eine Störsignal handelt. Deshalb wird gemäß Verfahrensschritt d) dieses erste empfangene Signal dann verworfen. Denkbar ist auch, dass im Verfahrenschritt d) eine Filtermethode Verwendung findet, die Störsignale erkennt und das empfangene Signal nur dann ausfiltert, wenn es sich um ein Störsignal handelt. Störsignale können beispielsweise bekanntermaßen über Zeitlaufbestimmungen, Amplitudenhöhe, Amplitudenverlauf, Häufigkeit etc. erkannt werden.

Diejenigen Abstandsmesssensoren, die ein Signal empfangen, sind folglich nicht mit einem störenden Medium abgedeckt. Sie können gemäß Verfahrensschritt f) erneut aktiviert werden, wobei die empfangenen Signale zur Bestimmung des Nahbereichs des Fahrzeugs auf bekannte Art und Weise ausgewertet werden können.

Diejenigen Abstandsmesssensoren, die kein reflektiertes Signal empfangen, befinden sich in einer Blindphase. Sie sind mit einem störenden Medium abgedeckt. Deshalb werden Sie gemäß Verfahrensschritt e) nicht freigegeben. Zur Erkennung des Nahbereichs des Fahrzeuges finden Sie folglich keine Verwendung.

Die Reihenfolge der Schritte a) bis f) kann variiert werden. So ist beispielsweise egal, ob Schritt a) oder Schritt b) zuerst ausgeführt wird. Ebenso ist unwesentlich, ob zuerst die Schritte c) und d) oder der Schritt e) ausgeführt wird.

Durch das beschriebene Verfahren wird also sichergestellt, dass nur diejenigen Abstandsmesssensoren zur Erkennung des Fahrzeugnahbereichs beitragen, die sich in keiner Blindphase befinden.

Erfindungsgemäß kann vorteilhafterweise vorgesehen sein, dass die Verfahrensschritte a) - f) für diejenigen Abstandsmesssensoren mehrfach wiederholt werden, die gemäß Schritt e) im jeweils vorhergehenden Verfahrensdurchlauf kein reflektiertes Signal empfangen haben. Dies hat den Vorteil, dass Abstandsmesssensoren, die sich bei Beginn des Verfahrens in einer Blindphase befunden haben, zu einem späteren Zeitpunkt bei Wiederholung des Verfahrens daraufhin geprüft werden, ob nun die Blindphase beendet ist, und der entsprechende Abstandsmesssensor freigegeben und auf normale Empfindlichkeit gestellt werden kann.

Vorteilhafterweise erfolgt ein Wiederholen des Verfahrensdurchlaufs so oft, bis sämtliche Abstandsmesssensoren ein Signal empfangen haben und auf normale Empfindlichkeit eingestellt sind. Erst wenn alle Abstandsmesssensoren freigegeben und auf normale Empfindlichkeit eingestellt sind, kann das System störungsfrei und funktionssicher arbeiten.

Bei einer Ausführungsform der Erfindung ist vorgesehen, dass das verfahren unmittelbar nach Inbetriebnahme des Fahrzeuges oder unmittelbar nach Inbetriebnahme des Nahbereichserkennungssystems durchgeführt wird. Hierdurch wird gewährleistet, dass vor Benutzung des Nahbereichserkennungssystems überprüft wird, ob Abstandsmesssensoren sich in einer Blindphase befinden und somit nicht zur Erkennung des Fahrzeugumfeldes herangezogen werden können.

Nach einer weiteren, besonders bevorzugten Ausführungsform der Erfindung wird vor der Durchführung der Verfahrensschritte a) bis f) eine Warnmeldung an den Fahrzeuglenker aktiviert. Aufgrund der Warmmeldung ist der Fahrzeuglenker darüber informiert, dass das Nahbereichserkennungssystem zum momentanen Zeitpunkt sich in einer Prüfphase befindet, wobei nicht ausgeschlossen werden kann, dass einzelne Abstandsmesssensoren nicht zur Erkennung des Fahrzeugumfeldes benutzt werden. Der Fahrzeuglenker kann sich somit auf eine besonders vorsichtige Fahrweise einstellen.

Bei einer vorteilhaften Ausgestaltung der Erfindung wird dem Fahrzeuglenker gemeldet, welcher bzw. welche der Abstandsmesssensoren kein reflektiertes Signal empfängt bzw. empfangen. Der Fahrzeuglenker kann dann in dem Bereich des Fahrzeuges, der nicht vollständig von dem Umfelderkennungssystem erfasst wird, besonders vorsichtig manövrieren. In die Bereiche, die von der vorgesehenen Anzahl der Abstandsmesssensoren erfasst werden, kann der Fahrzeuglenker sich auf das Umfelderkennungssystem verlassend das Fahrzeug bewegen.

Erfindungsgemäß wird die Warnmeldung dann deaktiviert, wenn sämtliche Abstandsmesssensoren ein Signal empfangen haben und auf normale Empfindlichkeit eingestellt sind. Durch die Deaktivierung der Warnmeldung wird folglich dem Fahrzeuglenker kund getan, dass das Nahbereichserkennungssystem nun funktionssicher arbeitet und dass sich keiner der Abstandsmesssensoren mehr in einer Blindphase befindet.

Erfindungsgemäß ist denkbar, dass bei Verfahrensschritt a) die Abstandsmesssensoren auf maximale Empfindlichkeit eingestellt werden. Hierdurch wird gewährleistet, dass reflektierte Signale, und sein es nur Störsignale, erkannt werden.

Die eingangs genannte Aufgabe wird außerdem durch ein Nahbereichserkennungssystem für Fahrzeuge gelöst, dass das im Vorhergehenden beschriebene Verfahren durchführt.

Weitere vorteilhafte Ausgestaltungen und Einzelheiten der Erfindung sind der nachfolgenden Beschreibung zu entnehmen, in der die Erfindung anhand eines Ausführungsbeispieles näher beschrieben und erläutert ist.

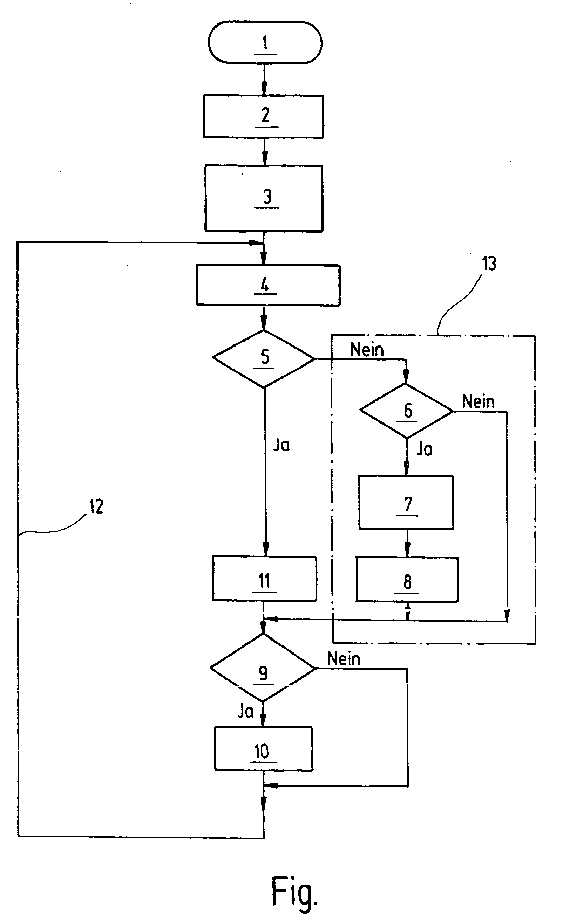

Die Figur zeigt den schematischen Ablauf des erfindungsgemäßen Verfahrens. An der Bezugszahl 1 wird das Verfahren durch die Inbetriebnahme des Nahbereichserkennungssystems, beispielsweise durch Einlegen des Rückwärtsganges oder des ersten Ganges des Fahrzeuges, gestartet.

Im nächsten Verfahrensschritt 2 wird eine Warnmeldung an den Fahrzeuglenker abgegeben, dass sich das Nahbereichserkennungssystem in einer Selbsttestphase befindet und ggf. nicht 100%-ig funktionsfähig ist.

Im Verfahrensschritt 3 werden dann von einem nicht dargestellten Steuergerät sämtliche Abstandsmesssensoren auf die maximale Empfindlichkeit eingestellt. In dem sich daran anschließenden, mit der Bezugszahl 4 gekennzeichneten Verfahrensschritt werden die Sensoren von dem Steuergerät aktiviert.

Bei dem ersten Verfahrensdurchlauf ist keiner der Sensoren freigegeben, da sie auf eine mögliche Blindphase hin überprüft werden. Die Freigabe ist in dem Ablaufdiagramm mit der Bezugzahl 5 gekennzeichnet.

Im Verfahrensschritt 6 wird überprüft, ob beim ersten Verfahrensdurchlauf sämtliche Sensoren ein reflektiertes Signal empfangen oder nicht. Diejenigen Sensoren, die ein reflektiertes Signal empfangen befinden sich in keiner Blindphase und werden deshalb bei Bezugszeichen 7 freigegeben und auf normale Empfindlichkeit eingestellt. Eine normale Empfindlichkeit beinhaltet, dass unerwünschte Störechos von den einzelnen Sensoren herausgefiltert werden. Das empfangene Echo, das durchaus ein Störecho sein kann, wird bei der Bezugszahl 8 verworfen.

In dem in der Figur mit 9 gekennzeichneten Verfahrensschritt wird abgefragt, ob sämtliche Sensoren bei Verfahrensschritt 7 freigegeben worden sind. Falls ja, befindet sich keiner der Sensoren in einer Blindphase, d.h. das System arbeitet nun mit 100%-iger Zuverlässigkeit. Dies hat zur Folge, dass bei dem mit der Bezugszahl 10 versehenen Verfahrensschritt die Warnmeldung an den Fahrzeuglenker, die in Verfahrensschritt 2 aktiviert wurde, deaktiviert wird. Damit wird dem Fahrzeuglenker mitgeteilt, dass das System fehlerfrei und zuverlässig arbeitet.

Bei einem erneuten Durchlauf des Verfahrens werden gemäß Verfahrensschritt 4 sämtliche Sensoren angesteuert bzw. aktiviert. Diejenigen Sensoren, die bei dem vorhergehenden Durchgang gemäß Verfahrensschritt 7 freigegeben wurden, folgen beim Verfahrensschritt 5 dem mit "ja" gekennzeichneten Zweig. Im Verfahrensschritt 11 erfolgt die Auswertung der von den freigegeben Sensoren erfassten reflektierten Signale zur Bestimmung des Umfeldes des Fahrzeuges.

Diejenigen Sensoren, die bei dem vorhergehenden Durchgang in Verfahrensschritt 7 nicht freigegeben wurden, weil Sie im Verfahrensschritt 6 keine Echo empfangen haben, werden erneut gemäß Verfahrensschritt 6 abgefragt, ob sie zwischenzeitlich ein Echo empfangen haben. Sollte die Blindphase der entsprechenden Sensoren zwischenzeitlich beendet sein, werden sie gemäß Verfahrenschritt 7 auf normale Empfindlichkeit eingestellt. Das erste empfangene Echo wird verworfen, da es sich um eine Störecho handeln kann.

Sollten auch beim zweiten Verfahrensdurchlauf Abstandsmesssensoren kein Echo gemäß Verfahrensschritt 6 empfangen, so folgen diese dem Zweig "nein" bei Verfahrensschritt 6.

Mit dem Pfeil 12 wird ein erneuter Verfahrensdurchlauf angedeutet. Die Schritte 6, 7 und 8 werden solange wiederholt, bis sämtliche Abstandsmesssensoren ein "erstes" Echo gemäß Verfahrensschritt 6 empfangen haben und gemäß Verfahrensschritt 7 freigegeben worden sind. Die innerhalb der strichpunktierten Linie 13 liegende Abfrage entfällt dann, da gemäß Verfahrensschritt 5 sämtliche Sensoren dem Zweig "ja" zu Verfahrensschritt 10 folgen. Wie bereits erwähnt, wird die Warnmeldung in Schritt 10 dann deaktiviert.

Erfindungsgemäß kann weiterhin vorgesehen sein, dass dem Fahrzeuglenker mitgeteilt wird, welche der Sensoren sich in einer Blindphase befinden, bzw. in welchem Bereich des Fahrzeuges das Umfeld nicht vollständig erfasst wird. Der Fahrzeuglenker kann dann gezielt in der Richtung, in der das Umfelderkennungssystem nicht voll funktionsfähig ist, besonders vorsichtig fahren.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Verfahren zur Steuerung eines Nahbereichserkennungssystems für Fahrzeuge, mit einem zentralen Steuergerät, das mehrere Abstandsmesssensoren ansteuert und aktiviert, **gekennzeichnet durch** folgende Verfahrensschritte:
a) Stellen der Abstandsmesssensoren auf eine Empfindlichkeit, die höher der normalen Empfindlichkeit ist,
b) Aktivieren der Abstandsmesssensoren,
c) Freigeben und auf normale Empfindlichkeit Stellen derjenigen Abstandsmesssensoren, die ein reflektiertes Signal empfangen,
d) Verwerfen des in Schritt c) empfangenen Signals oder nur dann ausfiltern des in Schritt c) empfangenen Signals, wenn es sich bei dem Signal um ein Störsignal handelt,
e) Nichtfreigeben derjenigen Abstandsmesssensoren, die kein reflektiertes Signal empfangen, und
f) erneutes Aktivieren der gemäß Schritt c) freigegebenen Abstandsmesssensoren und Auswerten der empfangenen Signale.

2. Verfahren nach Anspruch 1, **dadurch gekennzeichnet, dass** die Verfahrensschritte a) bis f) für die diejenigen Abstandsmesssensoren mehrfach wiederholt werden, die gemäß Schritt e) im jeweils vorhergehenden Verfahrensdurchlauf kein reflektiertes Signal empfangen haben.

3. Verfahren nach Anspruch 1 oder 2, **dadurch gekennzeichnet, dass** ein Wiederholen gemäß Anspruch 2 so oft erfolgt, bis sämtliche Abstandsmesssensoren ein Signal empfangen haben und auf normale Empfindlichkeit eingestellt sind.

4. Verfahren nach einem der vorhergehenden Ansprüche, **dadurch gekennzeichnet, dass** es unmittelbar nach Inbetriebnahme des Fahrzeuges oder nach Inbetriebnahme des Nanbereichserkennungssystems durchgeführt wird.

5. Verfahren nach einem der vorhergehenden Ansprüche, **dadurch gekennzeichnet, dass** vor der Durchführung der Verfahrensschritte a) bis f) eine Warnmeldung an den Fahrzeuglenker aktiviert wird.

6. Verfahren nach Anspruch 5, **dadurch gekennzeichnet, dass** dem Fahrzeuglenker gemeldet wird, welcher bzw. welche der Abstandsmesssensoren kein reflektiertes Signal empfängt bzw. empfangen.

7. Verfahren nach einem der vorhergehenden Ansprüche, **dadurch gekennzeichnet, dass** die Warnmeldung deaktiviert wird, wenn sämtliche Abstandsmesssensoren ein Signal empfangen haben und auf normale Empfindlichkeit eingestellt sind.

8. Verfahren nach einem der vorhergehenden Ansprüche, **dadurch gekennzeichnet, dass** bei Schritt a) die Abstandsmesssensoren auf maximale Empfindlichkeit eingestellt werden.

9. Nahbereichserkennungssystem für Fahrzeugen, mit einem zentralen Steuergerät, das mehreren Abstandsmesssensoren ansteuert und aktiviert, **dadurch gekennzeichnet, dass** das Nahbereichserkennungssystem das Verfahren nach einem der vorhergehenden Ansprüche durchführt.

## Claims

1. A method for controlling a proximity detection system for vehicles, having a central control device which triggers and activates a plurality of distance measuring sensors, **characterized by** the following method steps:
a) setting the distance measuring sensors to a sensitivity which is higher than the normal sensitivity,
b) activating the distance measuring sensors,
c) releasing and setting to normal sensitivity those distance measuring sensors which receive a reflected signal,
d) discarding the signal received in step c), or filtering out the signal received in step c) only if that signal is an interference signal,
e) not releasing those distance measuring sensors which do not receive a reflected signal, and
f) again activating the distance signal sensors which had been released in accordance with step c), and evaluating the received signals.

2. The method in accordance with claim 1, **characterized in that** the method steps a) to f) are repeated several times for those distance measuring sensors which, in accordance with step e), did not receive a reflected signal in the course of the respectively preceding method run.

3. The method in accordance with claim 1 or 2, **characterized in that** a repetition in accordance with claim 2 takes place until all distance measuring sensors have received a signal and have been set to normal sensitivity.

4. The method in accordance with one of the preceding claims, **characterized in that** it is performed directly after the vehicle has been put into operation, or after the proximity detection system has been put into operation.

5. The method in accordance with one of the preceding claims, **characterized in that** a warning report to the vehicle operator is transmitted prior to performing the method steps a) to f).

6. The method in accordance with claim 5, **characterized in that** the vehicle operator is informed which one, or which of the distance measuring sensors has, or have, not received a signal.

7. The method in accordance with one of the preceding claims, **characterized in that** the warning report is deactivated when all distance measuring sensors have received a signal and are set to normal sensitivity.

8. The method in accordance with one of the preceding claims, **characterized in that** the distance measuring sensors are set to maximum sensitivity in step a).

9. A proximity detection system for vehicles, having a central control device which controls and activates a plurality of distance measuring sensors, **characterized in that** the proximity detection system performs the method in accordance with one of the preceding claims.

## Revendications

1. Procédé pour la commande d'un système de reconnaissance de zone rapprochée pour véhicules, comprenant un appareil de commande central, qui amorce et active plusieurs capteurs de mesure de distance,
**caractérisé par** les étapes de procédé suivantes :
a) réglage des capteurs de mesure de distance sur une sensibilité supérieure à la sensibilité normale,
b) activation des capteurs de distance de mesure,
c) validation et réglage sur la sensibilité normale des capteurs de mesure de distance qui reçoivent un signal réfléchi,
d) rejet du signal reçu à l'étape c) ou filtrage du signal reçu à l'étape c) uniquement dans le cas où il s'agit d'un signal parasite en ce qui concerne le signal,
e) non-validation des capteurs de mesure de distance qui ne reçoivent pas de signal réfléchi, et
f) nouvelle activation des capteurs de mesure de distance validés selon l'étape c) et analyse des signaux reçus.

2. Procédé selon la revendication 1, **caractérisé en ce que** les étapes de procédé a) à f) sont répétées plusieurs fois pour les capteurs de mesure de distance qui n'ont pas reçu de signal réfléchi selon l'étape e) lors du passage respectivement précédent du procédé.

3. Procédé selon la revendication 1 ou 2, **caractérisé en ce qu'**une répétition selon la revendication 2 intervient jusqu'à ce que tous les capteurs de mesure de distance aient reçu un signal et soient réglés sur la sensibilité normale.

4. Procédé selon l'une quelconque des revendications précédentes, **caractérisé en ce qu'**il est mis en oeuvre immédiatement après la mise en service du véhicule ou après la mise en service du système de reconnaissance de zone rapprochée.

5. Procédé selon l'une quelconque des revendications précédentes,
**caractérisé en ce qu'**un message d'alerte destiné au conducteur du véhicule est activé avant la mise en oeuvre des étapes de procédé a) à f).

6. Procédé selon la revendication 5, **caractérisé en ce qu'**on signale au conducteur du véhicule quel(s) capteur(s) de mesure de distance reçoit ou ne reçoivent pas de signal réfléchi.

7. Procédé selon l'une quelconque des revendications précédentes,
**caractérisé en ce que** le message d'alarme est désactivé lorsque tous les capteurs de mesure de distance ont reçu un signal et sont réglés sur la sensibilisation normale.

8. Procédé selon l'une quelconque des revendications précédentes,
**caractérisé en ce que** les capteurs de mesure de distance sont réglés sur la sensibilité maximale à l'étape a).

9. Système de reconnaissance de zone rapprochée pour véhicules, comprenant un appareil de commande central, qui amorce et active plusieurs capteurs de mesure de distance, **caractérisé en ce que** le système de reconnaissance de zone rapprochée met en oeuvre le procédé selon l'une quelconque des revendications précédentes.
